# EUROPÄISCHE PATENTANMELDUNG

(11) **EP 1 217 386 A2**
(43) Veröffentlichungstag der Anmeldung: **26.06.2002**
(21) Anmeldenummer: 01123621.3
(22) Anmeldetag: 02.10.2001
(51) Int. Cl.: G01S 13/93

(54) **Abstandsüberwachungssystem zwischen zwei Fahrzeugen**

(30) Priorität: 21.12.2000 DE 10063893
(71) Anmelder: Valeo Schalter und Sensoren GmbH, 74321 Bietigheim-Bissingen (DE)
(72) Erfinder: Kupfernagel, Uwe, 71691 Freiberg (DE); Güllich, Armin, 71522 Backnang (DE)
(74) Vertreter: Steimle, Josef, Dipl.-Ing.

(57) **Zusammenfassung**

Die Erfindung betrifft ein Abstandsüberwachungssystem zur Überwachung des Abstandes zwischen einem sich bewegenden und einem stehenden Fahrzeug.

Die Erfindung kennzeichnet sich dadurch, dass das sich bewegende Fahrzeug eine Sendeeinheit und das stehende Fahrzeug eine Empfängereinheit aufweist, dass die Empfängereinheit des stehenden Fahrzeuges aufgrund von der Sendeeinheit ausgesendeten Aktivierungssignalen eine wenigstens den Fahrzeugnahbereich des stehenden Fahrzeuges überwachende Überwachungseinheit des stehenden Fahrzeuges aktiviert, wobei der Abstand zwischen den Fahrzeugen von der aktivierten Überwachungseinheit erfasst und von einem Indikator angezeigt wird.

## Beschreibung

Die Erfindung betrifft ein Abstandsüberwachungssystem zur Überwachung des Abstandes zwischen einem sich bewegenden und einem stehenden Fahrzeug. Die Erfindung betrifft außerdem ein Verfahren zur Abstandsüberwachung des Abstandes zwischen zwei Fahrzeugen.

Derartige Abstandsüberwachungssysteme sind in vielfältiger Art und Weise bekannt. Beispielsweise weisen solche Abstandsüberwachungssysteme Ultraschallsensoren auf, die an dem sich bewegenden Fahrzeug angeordnet sind. Setzt ein derartiges Fahrzeug zu einem Einparkmanöver an, so werden die Ultraschallsensoren aktiviert. Die Ultraschallsensoren überwachen hierbei den Fahrzeugnahbereich. Nähert sich das Fahrzeug beispielsweise einem parkenden Fahrzeug oder einem sonstigen Objekt, so wird ein Signal beim Eintreten des parkenden Fahrzeuges in den Überwachungsbereich der Überwachungseinheit des einparkenden Fahrzeuges gegeben. Der Fahrzeuglenker des einparkenden Fahrzeuges wird hierdurch über den sich verringernden Abstand zwischen seinem sich bewegenden Fahrzeug und beispielsweise einem parkenden Fahrzeug informiert.

Aufgabe der vorliegenden Erfindung ist es, derartige Abstandsüberwachungssyseme zu verbessern. Insbesondere soll eine zusätzliche deutliche Anzeige für den einparkenden Fahrzeuglenker als auch eine zusätzliche Sicherheit für ein bereits parkendes Fahrzeug erreicht werden.

Diese Aufgabe wird bei einem Abstandsüberwachungssystem der eingangs genannten Art dadurch gelöst, dass das sich bewegende Fahrzeug eine Sendeeinheit und das stehende Fahrzeug eine Empfängereinheit aufweist, dass die Empfängereinheit des stehenden Fahrzeuges aufgrund von der Sendeeinheit ausgesendeten Aktivierungssignalen eine wenigstens den Fahrzeugnahbereich des stehenden Fahrzeuges überwachende Überwachungseinheit des stehenden Fahrzeuges aktiviert, wobei der Abstand zwischen den Fahrzeugen von der aktivierten Überwachungseinheit erfasst und von einem Indikator angezeigt wird.

Im Unterschied zu den bekannten Abstandsüberwachungssystemen wird bei dem erfindungsgemäßen Überwachungssystem eine deaktivierte Überwachungseinheit des stehenden, bereits geparkten Fahrzeuges durch ein Signal des einparkenden bzw. des sich bewegenden Fahrzeuges aktiviert. Über die aktivierte Überwachungseinheit des stehenden, für das einparkende Fahrzeug ein Hindernis bildende Fahrzeug kann dem Fahrzeuglenker des einparkenden Fahrzeuges über einen Indikator ein entsprechendes zusätzliches Signal gegeben werden. Weist das sich bewegende, einparkende Fahrzeug ein Abstandsüberwachungssystem bekannter, eingangs beschriebener Art auf, so wird durch das erfindungsgemäße Überwachungssytem ein zweites Überwachungssystem an dem sich nicht bewegenden, stehenden Fahrzeug aktiviert.

Vorteilhafterweise ist der Indikator an dem stehenden Fahrzeug angeordnet. Erfindungsgemäß kann dabei der Indikator als insbesondere eine Blinkerleuchte, eine Bremsleuchte, eine Scheinwerferleuchte, eine Rückfahrleuchte, die Hupe oder als sonstiger, für den Lenker des sich bewegenden Fahrzeuges sichtbarer Indikator ausgebildet sein. Dies hat insbesondere den Vorteil, dass keine zusätzlichen Bauteile an das stehende Fahrzeug als Indikator anzubringen sind.

Als Maß für den Betrag des Abstandes zwischen den beiden Fahrzeugen kann vorgesehen sein, dass der Indikator in Abhängigkeit von dem sich ändernden Betrag des Abstandes zwischen den Fahrzeugen ein sich veränderndes akustisches, optisches, sensitives oder ähnliches Signal gibt. Denkbar ist demnach, dass eine Blinkerleuchte des stehenden Fahrzeuges mit Näherkommen des einparkenden Fahrzeuges an das stehende Fahrzeug die Blinkfrequenz erhöht.

Bei einer bevorzugten Ausführungsform der Erfindung ist vorgesehen, dass die Überwachungseinheit des stehenden Fahrzeuges die Empfängereinheit umfasst. Regelmäßig besteht eine Überwachungseinheit, wie sie bei bekannten Abstandsüberwachungssystemen vorhanden ist, aus einem Ultraschallsensor, der ein Sender- und Empfängerelement umfasst. Das Empfängerelement der Überwachungseinheit kann demnach auch die Empfängereinheit des erfindungsgemäßen Überwachungssystems beinhalten.

Weiterhin ist erfindungsgemäß denkbar, dass das sich bewegende Fahrzeug eine wenigstens den Nahbereich dieses Fahrzeuges überwachende Überwachungseinheit aufweist, wobei die Überwachungseinheit die Sendeeinheit umfasst.

Vorteilhafterweise wird auch hier auf ein zusätzliches Bauteil für die Sendeeinheit verzichtet, da das Sendeelement der an dem Fahrzeug vorhandenen Überwachungseinheit hierfür verwendet wird.

Andererseits ist erfindungsgemäß denkbar, dass die Sendeeinheit des sich bewegenden Fahrzeuges ein separates Sendeelement, insbesondere ein Infrarotsender o.dgl. ist. Durch ein derartiges separates Sendeelement können bei dem sich bewegenden Fahrzeug bekannte, eingangs beschriebene Abstandsüberwachungssysteme verwendet werden.

Bei einer besonders bevorzugten Form der Erfindung ist vorgesehen, dass das stehende als auch das sich bewegende Fahrzeug je ein Einparkhilfesystem aufweisen, wobei die Einparkhilfesysteme je eine Überwachungseinheit mit Empfänger- und Sendeeinheit umfassen. Bei dieser Ausführungsform kann vorgesehen sein, dass die Einparkhilfesysteme der beiden Fahrzeuge identisch sind. Vorteilhafterweise wird beim Einparken des einen als auch des anderen Fahrzeuges die Überwachungseinheit des jeweils anderen, stehenden Fahrzeuges aktiviert. Bei diesen, sich gegenseitig aktivierenden Einparkhilfesystemen wird ein optimaler, zusätzlicher Schutz des sich bewegenden als auch des bereits geparkten Fahrzeuges erzielt.

Die eingangs genannte Aufgabe wird außerdem durch ein Verfahren zur Abstandsüberwachung zwischen einem sich bewegenden und einem stehenden Fahrzeug gelöst, das sich dadurch kennzeichnet, dass das sich bewegende Fahrzeug ein Aktivierungssignal an das stehende Fahrzeug sendet, dass das vom stehenden Fahrzeug empfangene Aktivierungssignal eine wenigstens den Fahrzeugnahbereich des stehenden Fahrzeuges überwachende Überwachungseinheit aktiviert und dass der Abstand zwischen den Fahrzeugen von der aktivierten Überwachungseinheit erfasst und angezeigt wird. Ein derartiges Verfahren weist insbesondere den Vorteil auf, dass nicht nur das sich bewegende Fahrzeug, sondern das bereits geparkte, stehende Fahrzeug aktiv an dem Einparkvorgang beteiligt wird. Hierdurch wird ein zusätzlicher Schutz für das einparkende als auch für das bereits geparkte Fahrzeug sichergestellt.

Weiterhin wird die eingangs genannte Aufgabe erfindungsgemäß durch die Anwendung des im vorhergehend beschriebenen Abstandsüberwachungssystems als auch des Verfahrens zur Abstandsüberwachung als Einparkhilfesystem für Fahrzeuge gelöst.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

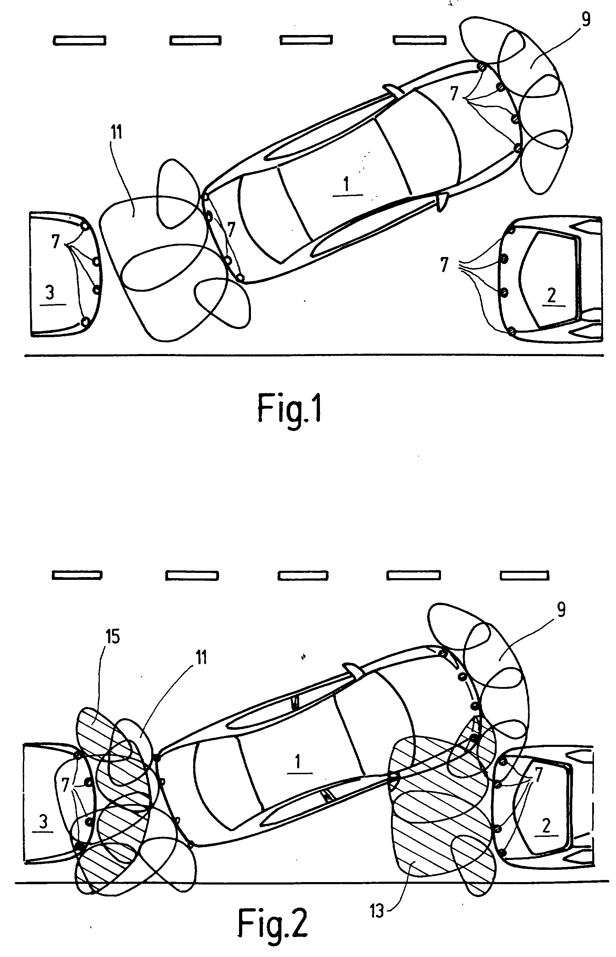

In Figur 1 und Figur 2 sind zwei verschiedene Momentaufnahmen eines Einparkvorganges dargestellt.

Figur 1 zeigt ein sich bewegendes, rückwärts einparkendes Fahrzeug 1. Weiterhin sind zwei stehende, eingeparkte Fahrzeuge 2 und 3 dargestellt. Zwischen den Fahrzeugen 2 und 3 ist eine Parklücke vorhanden. Das Fahrzeug 1 weist an seinem Frontbereich als auch an seinem Heckbereich jeweils vier Ultraschallsensoren 7 auf. Die Ultraschallsensoren weisen jeweils ein Sende- als auch ein Empfängerelement auf. Die Ultraschallsensoren 7 sind Bestandteil eines Einparkhilfesystems des Fahrzeugs 1. Die Ultraschallsensoren 7 bilden hierbei eine Überwachungseinheit, die den Fahrzeugnahbereich an der Fahrzeugfront als auch an dem Fahrzeugheck überwachen. Der überwachte Bereich ist in Figur 1 durch umrandete Felder dargestellt. Der Überwachungsbereich an der Fahrzeugfront ist mit der Bezugsziffer 9 gekennzeichnet, der an dem Fahrzeugheck mit der Bezugsziffer 11.

Die beiden parkenden Fahrzeugen 2 und 3 weisen jeweils ein Einparkhilfesystem auf, das demjenigen des Fahrzeugs 1 entspricht. In Figur 1 sind die Einparkhilfesysteme der Fahrzeuge 2 und 3 deaktiviert, d.h. der Fahrzeugnahbereich der Fahrzeuge 2 und 3 wird in Figur 1 nicht überwacht.

Bei der in Figur 2 dargestellten Situation befindet sich das Fahrzeug 1 in fortgeschrittener Einparkposition. Hierbei befinden sich die Fahrzeuge 2 und 3 innerhalb des Überwachungsbereichs 9 bzw. 11 des Fahrzeugs 1. Die Sendeelemente der Ultraschallsensoren 7 des Fahrzeugs 1 haben in der Position nach Figur 2 die Empfängerelemente der Ultraschallsensoren der Fahrzeuge 2 und 3 erreicht und damit die beiden Überwachungseinheiten der Fahrzeugnahbereiche der Fahrzeuge 2 und 3 aktiviert. Der in Figur 2 dargestellte Überwachungsbereich des Fahrzeugs 2 ist mit 13 beziffert, der des Fahrzeugs 3 mit 15. Die beiden Überwachungsbereiche 13 und 15 sind schraffiert dargestellt.

Da die Fahrzeuge 2 und 3 innerhalb den Überwachungsbereichen 9 und 11 des Fahrzeugs 1 sind, erhält der Fahrzeuglenker des Fahrzeugs 1 von dem Einparkhilfesystem des Fahrzeugs 1 eine Nachricht, dass sein Fahrzeug 1 nahe des Fahrzeugs 2 bzw. 3 ist.

Durch die Aktivierung der Parkhilfesysteme der Fahrzeuge 2 und 3 wird erfindungsgemäß der Abstand zwischen den Fahrzeugen 1 und 2 bzw. 1 und 3 zusätzlich überwacht. Bei Unterschreiten eines kritischen Wertes wird dies dem Fahrzeuglenker über einen Indikator angezeigt. Der Indikator gibt in Abhängigkeit von dem sich ändernden Betrag des Abstandes zwischen den Fahrzeugen ein sich veränderndes Signal. Das Signal kann hierbei beispielsweise durch ein Betätigen der Hupe des Fahrzeuges 2 bzw. 3 erfolgen. Denkbar ist auch, dass das entsprechende Fahrzeug 2 oder 3 ein Signal durch Betätigen der Blinkeinrichtung des entsprechenden Fahrzeuges gibt.

Bei dem in den Figuren beschriebenen Ausführungsbeispiel bilden die Ultraschallsensoren 7 die Sendeeinheit, die Aktivierungssignale aussendet. Alternativ dazu ist denkbar, dass Fahrzeug 1 einen oder mehrere Infrarotsender aufweist, die entsprechende Aktivierungssignale an die Fahrzeuge 2 und 3 bzw. an deren Einparkhilfesysteme übersenden.

Weiterhin umfassen die Ultraschallsensoren 7 der Fahrzeuge 2 und 3 Empfängereinheiten, welche die von dem Fahrzeug 1 ausgehenden Aktivierungssignale empfangen. Alternativ hierzu ist erfindungsgemäß denkbar, dass separate Empfängereinheiten vorgesehen sind, die das vom Fahrzeug 1 ausgehende Aktivierungssignal empfangen und die entsprechenden Überwachungseinheiten der Fahrzeuge 2 und 3 aktivieren.

Das in den Figuren beschriebene Abstandsüberwachungssystem bzw. Einparkhilfesystem hat insbesondere den Vorteil, dass der Lenker des Fahrzeugs 1 über zwei unabhängige Systeme über den Abstand zu den stehenden Fahrzeugen 2 und 3 informiert wird. Hierbei wird die Sicherheit des Einparkvorganges erhöht.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Abstandsüberwachungssystem zur Überwachung des Abstandes zwischen einem sich bewegenden und einem stehenden Fahrzeug, **dadurch gekennzeichnet, dass** das sich bewegende Fahrzeug (1) eine Sendeeinheit (7) und das stehende Fahrzeug (2, 3) eine Empfängereinheit (7) aufweist, dass die Empfängereinheit des stehenden Fahrzeuges (2, 3) aufgrund von der Sendeeinheit (7) ausgesendeten Aktivierungssignalen (9, 11) eine wenigstens den Fahrzeugnahbereich des stehenden Fahrzeuges (2, 3) überwachende Überwachungseinheit (7, 13 bzw. 7, 15) des stehenden Fahrzeuges (2, 3) aktiviert, wobei der Abstand zwischen den Fahrzeugen (1 und 2, 3) von der aktivierten Überwachungseinheit (7, 13 bzw. 7, 15) erfasst und von einem Indikator angezeigt wird.

2. System nach Anspruch 1, **dadurch gekennzeichnet, dass** der Indikator an dem stehenden Fahrzeug (2, 3) angeordnet ist.

3. System nach Anspruch 1 oder 2, **dadurch gekennzeichnet, dass** wenigstens eine Blinkerleuchte, Bremsleuchte, Scheinwerferleuchte, Rückfahrleuchte, Hupe, o.dgl. des stehenden Fahrzeuges als Indikator ausgebildet ist.

4. System nach einem der vorhergehenden Ansprüche, **dadurch gekennzeichnet, dass** der Indikator in Abhängigkeit von dem sich ändernden Betrag des Abstandes zwischen den Fahrzeugen ein sich veränderndes akustisches, optisches, sensitives o.dgl. Signal gibt.

5. System nach einem der vorhergehenden Ansprüche, **dadurch gekennzeichnet, dass** die Überwachungseinheit (7, 13 bzw. 7, 15) des stehenden Fahrzeuges (2, 3) die Empfängereinheit umfasst.

6. System nach einem der vorhergehenden Ansprüche, **dadurch gekennzeichnet, dass** das sich bewegende Fahrzeug (1) eine wenigstens den Nahbereich dieses Fahrzeuges überwachende Überwachungseinheit (7, 9, 11) aufweist, wobei die Überwachungseinheit (7, 9, 11) die Sendeeinheit umfasst.

7. System nach einem der vorhergehenden Ansprüche, **dadurch gekennzeichnet, dass** die Sendeeinheit des sich bewegenden Fahrzeuges (1) ein separates Sendeelement, insbesondere ein Infrarotsender o.dgl., ist.

8. System nach einem der vorhergehenden Ansprüche, **dadurch gekennzeichnet, dass** das stehende (2, 3) und das sich bewegende Fahrzeug (1) je ein Einparkhilfesystem aufweisen, wobei die Einparkhilfesysteme je eine Überwachungseinheit (7, 9, 11 bzw. 7, 13 bzw. 7, 15) mit Empfänger- und Sendeeinheit umfassen.

9. Verfahren zur Abstandsüberwachung des Abstandes zwischen einem sich bewegenden und einem stehenden Fahrzeug, **dadurch gekennzeichnet, dass** das sich bewegende Fahrzeug (1) ein Aktivierungssignal (9, 11) an stehende Fahrzeug (2, 3) sendet, dass das vom stehenden Fahrzeug (2, 3) empfangene Aktivierungssignal (9, 11) eine wenigstens den Fahrzeugnahbereich des stehenden Fahrzeuges (2, 3) überwachende Überwachungseinheit (7, 13 bzw. 7, 15) aktiviert und dass der Abstand zwischen den Fahrzeugen (1 und 2, 3) von der aktivierten Überwachungseinheit (7, 13 bzw. 7, 15) erfasst und angezeigt wird.

10. Anwendung des Systems nach einem der Ansprüche 1 bis 8 und/oder des Verfahrens nach Anspruch 9 als Einparkhilfesystem für Fahrzeuge (1, 2, 3).
